# EUROPÄISCHE PATENTANMELDUNG

(11) **EP 3 760 367 A1**
(43) Veröffentlichungstag der Anmeldung: **06.01.2021**
(21) Anmeldenummer: 20191434.8
(22) Anmeldetag: 29.01.2014
(51) Int. Cl.: B23K 31/12, B23K 26/34, B29C 67/00, B22F 3/105

(54) **VERFAHREN ZUR BEURTEILUNG DER STRUKTURQUALITÄT VON DREIDIMENSIONALEN BAUTEILEN**

(30) Priorität: 08.03.2013 DE 102013003937
(62) Teilanmeldung aus: 18215619.0
(71) Anmelder: CL Schutzrechtsverwaltungs GmbH, 96215 Lichtenfels (DE)
(72) Erfinder: Herzog, Frank Carsten, 96215 Lichtenfels (DE)
(74) Vertreter: Hafner & Kohl PartmbB

(57) **Zusammenfassung**

Die Erfindung betrifft ein Verfahren zur Beurteilung der Strukturqualität von dreidimensionalen Bauteilen, die durch ein Lasersinter- oder ein Laserschmelzverfahren hergestellt werden.

## Beschreibung

Die Erfindung betrifft ein Verfahren zur Beurteilung der Strukturqualität von dreidimensionalen Bauteilen, die durch ein Lasersinter- oder ein Laserschmelzverfahren hergestellt werden. Bei Lasersinter- oder Laserschmelzverfahren werden Bauteile durch aufeinanderfolgendes Verfestigen einzelner Schichten eines Baumaterials durch Sintern oder Aufschmelzen verfestigt. Der durch einen punkt- oder linienförmigen Energieeintrag erzeugte Schmelzbereich wird durch eine Sensorvorrichtung erfasst, daraus werden Sensorwerte zur Evaluierung einer Bauteilqualität hergeleitet und die Sensorwerte zusammen mit den die Sensorwerte im Bauteil lokalisierenden Koordinaten werden abgespeichert.

Ein derartiges Verfahren geht aus DE 20 2010 010 771.7 hervor. Beim Stand der Technik ist es bereits möglich, anhand der Sensorwerte zu entscheiden, ob sich beim Bauvorgang im Bauteil strukturkritische, d. h. sich auf die Qualität, insbesondere die Festigkeit des Bauteils auswirkende Störstellen gebildet haben, bei denen z. B. das Baumaterial nicht in der vorhergesehenen Weise verfestigt ist oder sich aufgrund des Bauvorganges sonstige Störstellen gebildet haben.

Der Erfindung liegt die Aufgabe zugrunde, ein Verfahren mit den Merkmalen des Patentanspruches 1 derart auszubilden, dass nach Fertigstellung des hergestellten Bauteils mit reduziertem Aufwand an diesem weitergehende Untersuchungen wie z. B. Bruchtests, Bauteilschnitte durchgeführt werden können. Diese Aufgabe wird durch die kennzeichnenden Merkmale des Anspruches 1 gelöst. Vorteilhafte Weiterbildungen ergeben sich aus den Unteransprüchen.

Als Kern des Verfahrens wird es angesehen, zunächst einmal die ermittelten Sensorwerte grundsätzlich zu unterteilen in Sensorwerte, die für die Strukturqualität des Bauteils kritisch erscheinen und solche, die als unkritisch eingestuft werden. Die kritischen Sensorwerte können dann abstandsbezogen auf einen im Bereich der Oberfläche des Bauteils liegenden oder angeordneten Bezugspunkt dargestellt werden. Mit anderen Worten ist es möglich, kritische Sensorwerte z. B. abstandsbezogen zu einer Bodenfläche des Bauteils darzustellen oder zu einer ausgewählten Seitenfläche. Die Bedienungsperson weiß dann ganz genau, in welcher Tiefe bezogen auf die ausgewählte Seitenfläche ein Fehler zu vermuten ist und hat dann die Möglichkeit, an der entsprechenden Stelle des Bauteils z. B. Bruchtests durchzuführen oder mittels einer Diamantsäge das Bauteil aufzuschneiden und im Wege eines "Reverse Engineering" nachzuforschen, welche Auswirkungen Störungen beim Bauvorgang auf das Bauteil, insbesondere auf dessen Strukturqualität und damit auf die Festigkeit des Bauteils haben. Die genaue abstandsbezogene Lokalisierung zu einem Außenbereich des Bauteils ermöglicht es, das Bauteil z.B. einzuspannen und dann genau an der entsprechenden Stelle aufzusägen, aufzubohren oder sonstige Tests durchzuführen, um den als kritisch eingestuften Innenbereich des Bauteils zu erforschen.

Als Bezugspunkt, der zur abstandsbezogenen Darstellung der für die Strukturqualität des Bauteils kritischenweise dienen kann, bieten sich definierte Punkte auf einer Außenfläche des fertigen Bauteils, eine Kante des Bauteils oder z. B. eine Spannausnehmung oder ein Spannvorsprung an dem fertiggestellten Bauteil an. Spannausnehmungen oder Spannvorsprünge dienen an Bauteilen dazu, diese nach dem Bauvorgang mit Hilfe eines Spannsystems in eine Bearbeitungsmaschine einzusetzen und über das Spannsystem exakt zu positionieren. Ist der genaue Abstand bzw. die genaue Innenlage von Störstellen im Bauteil bezogen auf den Spannpunkt bekannt, dann kann z.B. über einen Bearbeitungsautomaten eine genaue Untersuchung des fertiggestellten Bauteils erfolgen, z.B. durch eine zerspanende Technik oder auch durch zerstörungsfreie Untersuchungsmethoden.

Wird eine Vermaßung zwischen dem gewählten Bezugspunkt, z. B. dem Spannpunkt und einem als strukturkritisch beurteilten angezeigten Sensorwert, der eine Störstelle im Bauteil darstellen kann, vorgenommen, dann lassen sich Untersuchungsgeräte wie beispielsweise eine Schneidevorrichtung, eine Bohrvorrichtung, eine Bruchvorrichtung, mit der das Bauteil an einer ganz bestimmten Stelle auf Bruch getestet werden soll und dgl. besonders exakt an das zu untersuchende Bauteil heranführen.

Zur Beschleunigung des Verfahrens und zur Vereinfachung einer Darstellung ist es vorteilhaft, wenn das Bauteil vorab in belastungskritische und belastungsunkritische Bereiche aufgeteilt wird und eine Anzeige von als strukturkritisch eingestuften Sensorwerten nur in belastungskritischen Bauteilbereichen vorgenommen wird. Damit lässt sich die nach Art eines "Computertomogramms" auszuführende 3D-Darstellung vereinfachen und deutlich übersichtlicher machen. Belastungsunkritische Bereiche des Bauteils werden nicht mit Sensorwertdarstellungen versehen und bleiben damit transparent, sodass die belastungskritischen Bauteile besser inspiziert werden können. Unter Umständen ist es aber vorteilhaft, besonders strukturkritische Sensorwerte, d. h. Sensorwerte die auch belastungsunkritische Bauteile als Ausschuss ausweisen könnten, mit angezeigten Sensorwerten zu versehen.

Bei der Konstruktion eines Bauteils ist es möglich, von vorne herein in belastungskritischen Bauteilen aufgrund konstruktiver Vorgegebenheiten mögliche Bruchlinien zu definieren. Treten in der Nähe solcher vorab bestimmter Bruchlinien als strukturkritisch beurteilte Sensorwerte auf, dann ist Vorsicht geboten. Deswegen ist es vorteilhaft, Bruchlinien zu definieren, unter Umständen sogar in der Darstellung anzuzeigen und als strukturkritisch beurteilte Sensorwerte bezogen auf mögliche Bruchlinien darzustellen. Dabei kann auch der Abstand zwischen den strukturkritischen Sensorwerten und möglichen Bruchlinien vermaßt dargestellt werden, um dem Betrachter genaue Auskunft zu geben, wie weit als strukturkritisch beurteilte Sensorwerte von möglichen Bruchlinien entfernt sind. Es ist auch möglich, eine Mehrzahl von nahe beieinanderliegenden als strukturkritisch einzustufenden Sensorwerten als Sensorwertecluster anzuzeigen. Reicht z. B. ein Sensorwertecluster mit strukturkritischen Herstellungswerten in die Nähe einer Bruchlinie oder gar über diese hinweg, so ist davon auszugehen, dass das Bauteil bei Belastung im Bereich der Bruchlinie zu Bruch geht. Dann kann eine bestehende hohe Bruchgefahr auf einem Display angezeigt werden, ohne dass das Bauteil einem Bruchtest unterzogen wird.

Die Bruchgefahr kann im Bruchgefahrstufen angezeigt werden, wobei eine Einordnung in Bruchgefahrstufen abhängig von der Anzahl kritischer Sensorwerte, der Schwere der aufgrund der Sensorwerte zu erwartenden Strukturstörungen bezogen auf einzelne Sensorwerte oder Sensorwertcluster und deren Abstand zu einer möglichen Bruchlinie erfolgt.

Die Ansprüche 12 - 14 beschreiben Maßnahmen, die zu einer zerstörenden Untersuchung des Bauteils führen und Aufschluss geben, welcher Art die Strukturstörungen sind, die von den Sensorwerten angezeigt werden können und welche Festigkeitsfolgen diese Strukturstörungen auf das Bauteil haben.

Die Erfindung ist anhand vorteilhafter Ausführungsbeispiele näher erläutert. Diese zeigen:
- Fig. 1: eine schematische zweidimensionale Darstellung eines z.B. knochenförmigen, d.h. mittig eingeschnürten Bauteils mit verfahrensgemäß dargestellten kritischen Sensorwerten;
- Fig. 2: eine schematische 3D-Darstellung eines stangenartigen Bauteils mit angezeigten Sensorwerten.

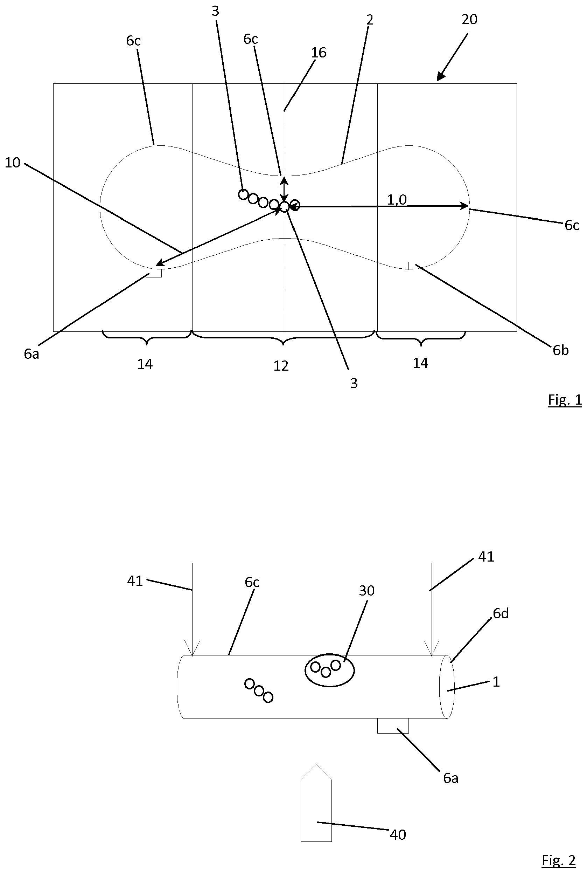

Bei dem Verfahren werden durch ein Lasersinter- oder Laserschmelzverfahren Bauteile hergestellt. In Fig. 1 ist ein knochenartiges Bauteil 1 mit einer Einschnürung 2 im Mittelbereich des Bauteils 1 zweidimensional, d.h. als Bauteilschicht dargestellt. Verfestigung des Bauteils erfolgt durch Verfestigung einzelner Schichten durch die Einwirkung einer Strahlung durch Sintern oder Aufschmelzen eines pulverartigen Baumaterials. Der Schmelzbereich, der durch den Energieeintrag entsteht, wird durch eine Sensorvorrichtung erfasst und daraus werden Sensorwerte zur Evaluierung einer Bauteilqualität hergeleitet. Die Sensorwerte können zwei- oder mehrdimensional bezogen auf ihren Erfassungsort im Bauteil 1 dargestellt werden, z.B. durch fleckartige Abbildungen von Bauteilstörstellen 3.

Die Sensorwerte werden zusammen mit den die Sensorwerte im Bauteil 1 lokalisierenden Koordinatenwerten abgespeichert.

Gemäß der Erfindung werden zunächst die ermittelten Sensorwerte in für die Strukturqualität des Bauteils 1 kritische und unkritische Werte unterteilt. Dies bedeutet, dass z.B. abhängig von der Größe einer Störung, von einer Temperaturabweichung beim Bauvorgang, von Pulverfehlstellen im Schichtauftrag und dergleichen die Sensorwerte in kritisch und unkritisch unterteilt werden und wenigstens die für die Strukturqualität des Bauteils 1 kritischen Werte abstandsbezogen auf einen im Bereich der Oberfläche 5 des Bauteils liegenden oder angeordneten Bezugspunkt dargestellt werden. Als Bezugspunkt 6 kann beispielsweise ein Spannvorsprung 6a, eine Spannausnehmung 6b oder ein beliebiger Punkt 6c auf der Oberfläche 5 des Bauteils herangezogen werden. Bedeutungsvoll ist in diesem Zusammenhang, dass nach Fertigstellung des Bauteils 1 ausgehend von der Oberfläche 5 des Bauteils festgestellt werden kann, wo und insbesondere in welcher Tiefe im Bauteil die kritischen Werte 3 angeordnet sind.

In vorteilhafter Weise erfolgt eine Visualisierung der kritischen Sensorwerte mittels einer Visualisierungseinrichtung, wobei eine Vermaßung 10 durch Maßpfeile hilfreich ist, um ausgehend von einem gewählten Bezugspunkt 6 den kritischen Wert im Bauteilinneren aufzuspüren.

Ausgehend von konstruktiven Gegebenheiten kann ein Bauteil 1 in belastungskritische Bereiche 12 und belastungsunkritische Bereiche 14 aufgeteilt werden und eine Anzeige von als strukturkritisch eingestuften Sensorwerten 3 nur in den belastungskritischen Bauteilbereichen 12 erfolgen. Allerdings sollten vorteilhafterweise besonders strukturkritisch beurteilte Sensorwerte, d.h. Fehlstellen, die hinsichtlich der Bauteilqualität als besonders kritisch einzustufen sind, in allen Bauteilbereichen 12, 14 angezeigt werden. Verfahrensgemäß ist es möglich, in belastungskritischen Bauteilbereichen 12 aufgrund konstruktiver Vorgegebenheiten mögliche Bruchlinien 16 zu definieren und die als strukturkritisch beurteilten Sensorwerte bezogen auf eine mögliche Bruchlinie 16 darzustellen. Liegen ein oder mehrere kritische Sensorwerte 3 nahe bei oder sogar auf einer Bruchlinie 16, dann ist eine relativ hohe Bruchwahrscheinlichkeit des Bauteils 1 vorhanden, die auf einer Anzeigevorrichtung einer Visualisierungseinrichtung 20 z.B. in Form eines Bildschirms angezeigt werden kann. Darüber hinaus ist es vorteilhaft, eine Mehrzahl von strukturkritischen Sensorwerten, die nahe beieinander liegen als Sensorwertecluster 30 anzuzeigen, weil nahe beieinander liegende kritische Sensorwerte aufgrund einer Strukturwechselwirkung natürlich besonders kritisch für die Bauteilqualität sind.

Auf der Visualisierungseinrichtung 20 kann die Bruchgefahr in Bruchgefahrstufen angezeigt werden, wobei eine Einordnung in Bruchgefahrstufen abhängig von der Anzahl kritischer Sensorwerte, der Schwere der aufgrund der Sensorwerte zu erwartenden Strukturstörungen bezogen auf einzelne Sensorwerte oder Sensorwertcluster oder deren Abstand zu einer möglichen Bruchlinie 16 erfolgt.

In Zeichnungsfigur 2 ist noch dargestellt, wie ein fertig gestelltes Bauteil 1 in Stangenform mit einer Mehrzahl von kritischen Sensorwerten 3 oder Sensorwertclustern 30 in einem Bruchbelastungstest unterzogen wird. Dazu wird mit Hilfe des gewählten Bezugspunktes 6a, 6c oder 6d das Bauteil 1 zu einer Bruchschneide 40 positioniert und durch Ausübung einer Gegenkraft 41 auf die Bruchschneide 40 gedrückt. Derartige Bruchtests dienen dazu, um in Praxis die Auswirkungen von Strukturstörungen in Form von kritischen Sensorwerten 3 oder Sensorwertclustern 30 auf die Bruchqualität des Bauteils 1 zu untersuchen.

Grundsätzlich ist es möglich, mit Hilfe des Verfahrens auch unmittelbaren Einfluss auf den Herstellungsprozess zu nehmen und/oder zumindest eine Bedienungsperson während des laufenden Herstellungsprozesses über auftretende kritische Werte, die für die Strukturqualität des Bauteils relevant sind, zu informieren. Wird beispielsweise durch die Vorrichtung festgestellt, dass in einem Bauteilbereich, der als belastungskritisch angesehen wird, eine Mehrzahl von Störstellen auftritt, die durch kritische Sensorwerte angezeigt werden, dann kann eine optische oder akustische Warneinrichtung initiiert werden, um der Bedienungsperson eine entsprechende Mitteilung zu machen. Gegebenenfalls ist es aber auch möglich, die Belichtungseinrichtung der Vorrichtung zu veranlassen, kritische "unterbelichtete" Stellen des Bauteils noch einmal nachzubelichten bzw. nachzubestrahlen und dadurch den erforderlichen Schmelzprozess zu vervollständigen, falls eine ungenügende Bestrahlung des Bauteils in dem jeweiligen Bereich erkannt wurde. Gleiches gilt für einen Nachbeschichtungsprozess dann, wenn festgestellt wird, dass der Pulverauftrag an einer entsprechenden Stelle nicht komplett war. In diesem Falle ist es möglich, Bauteilbereiche mit zu wenig Baumaterial noch einmal nachzubeschichten und dann gezielt dort aufzuschmelzen, um Fehlstellen zu heilen.

Weitere Merkmale der Erfindung sind in den nachfolgenden Aspekten wiedergegeben:
1. Verfahren zur Beurteilung der Strukturqualität von dreidimensionalen Bauteilen (1), die durch ein Lasersinter- oder Laserschmelzverfahren hergestellt werden, bei welchem das Bauteil (1) durch aufeinanderfolgendes Verfestigen einzelner Schichten aus durch Einwirkung einer Strahlung verfestigbaren Baumaterials durch Sintern oder Aufschmelzen des Baumaterials erfolgt, wobei der durch einen punkt- oder linienförmigen Energieeintrag erzeugte Schmelzbereich durch eine Sensorvorrichtung erfasst wird und daraus Sensorwerte (3) zur Evaluierung einer Bauteilqualität hergeleitet werden und die Sensorwerte (3) zusammen mit den die Sensorwerte (3) im Bauteil (1) lokalisierenden Koordinatenwerten abgespeichert werden, umfassend:
   - Einteilung der ermittelten Sensorwerte (3) in für die Strukturqualität des Bauteils (1) kritische Werte und unkritische Werte und
   - Darstellung wenigstens der für die Strukturqualität des Bauteils (1) kritischen Werte abstandsbezogen auf einen im Bereich der Oberfläche (5) des Bauteils (1) liegenden oder angeordneten Bezugspunkt (6).
2. Verfahren nach Aspekt 1, wobei als Bezugspunkt (6) ein definierter Punkt (6c) auf einer Außenfläche (5) des fertiggestellten Bauteils (1), eine Kante (6d) des fertiggestellten Bauteils (1) oder eine Spannausnehmung (6b) oder ein Spannvorsprung (6a) an dem fertiggestellten Bauteil (1) definiert wird.
3. Verfahren nach Aspekt 1 oder 2, wobei die zur Evaluierung der Strukturqualität erfassten Sensorwerte (3) mittels einer Visualisierungseinrichtung (20) in zwei- oder mehrdimensionaler Darstellung bezogen auf ihren Erfassungsort im Bauteil (1) und bezogen auf den gewählten Bezugspunkt (6) auf dem Bauteil (1) dargestellt werden.
4. Verfahren nach einem der vorhergehenden Aspekte umfassend Anzeige einer Vermaßung (10) zwischen dem gewählten Bezugspunkt (6) und einem als strukturkritisch beurteilten angezeigten Sensorwert (3).
5. Verfahren nach einem der vorhergehenden Aspekte, wobei das Bauteil (1) in belastungskritische (12) und belastungsunkritische Bereiche (14) aufgeteilt wird und eine Anzeige von als strukturkritisch eingestuften Sensorwerten (3) nur in belastungskritischen Bauteilbereichen (12) durchgeführt wird.
6. Verfahren nach einem der vorhergehenden Aspekte, wobei als besonders strukturkritisch beurteilte Sensorwerte (3) in allen Bauteilbereichen (12, 14) angezeigt werden.
7. Verfahren nach einem der vorhergehenden Aspekte, wobei in belastungskritischen Bauteilbereichen (12) aufgrund konstruktiver Vorgegebenheiten mögliche Bruchlinien (16) definiert und die als strukturkritisch beurteilten Sensorwerte (3) bezogen auf eine mögliche Bruchlinie (16) darstellbar sind.
8. Verfahren nach einem der vorhergehenden Aspekte, wobei eine Mehrzahl von beieinanderliegenden, als strukturkritisch einzustufenden Sensorwerten (3) als Sensorwertecluster (30) anzeigbar sind.
9. Verfahren nach einem der vorhergehenden Aspekte, wobei die Sensorwertecluster (30) bezogen auf mögliche Bruchlinien (16) dargestellt werden und bei einem festzulegenden Häufungsgrad kritischer Sensorwerte (3) in der Nähe möglicher Bruchlinien (16) eine hohe Bruchgefahr angezeigt wird.
10. Verfahren nach einem der vorhergehenden Aspekte, wobei die Bruchgefahr in Bruchgefahrstufen angezeigt wird, wobei eine Einordnung in Bruchgefahrenstufen abhängig von der Anzahl kritischer Sensorwerte (3), der Schwere der aufgrund der Sensorwerte (3) zu erwartenden Strukturstörungen bezogen auf einzelne Sensorwerte (3) oder Sensorwertcluster (30) und/oder deren Abstand zu einer möglichen Bruchlinie (16) erfolgt.
11. Verfahren nach Aspekt 7, wobei der Abstand kritischer Sensorwerte (3) oder kritischer Sensorwertecluster (30) mit vermaßten Abstandslinien (10) bezogen auf mögliche Bruchlinien (16) dargestellt werden.
12. Verfahren nach einem der vorhergehenden Aspekte, wobei das fertiggestellte Bauteil (1) in eine mittels seiner Spannausnehmung (6b) oder seinem Spannvorsprung (6a) oder bezogen auf eine Kante (6d) oder Fläche (6c) des Bauteils (1) in definierter Lage in eine Spannvorrichtung eingesetzt wird und ein Innenbereich des Bauteils (1) mit als strukturkritisch beurteilten festgestellten Sensorwerten (3) freigelegt wird.
13. Verfahren nach Aspekt 12, wobei das Freilegen des zu untersuchenden Innenbereiches des Bauteils (1) durch ein Aufschneiden des Bauteils (1), Aufbohren des Bauteils (1) oder Brechen des Bauteils (1) erfolgt.
14. Verfahren nach Aspekt, wobei das Brechen des Bauteils (1) in einer Bruchvorrichtung erfolgt, wobei eine Bruchschneide (40) der Bruchvorrichtung an einem Außenbereich des definiert eingespannten Bauteils (1) angelegt wird, unter welchem kritische Sensorwerte (3) angeordnet sind und zum Bruch des Bauteils (1) führende Kräfte auf das Bauteil (1) ausgeübt werden und eine Bruchlast bestimmt wird.

### BEZUGSZEICHENLISTE

- 1: Bauteil
- 2: Einschnürung
- 3: Sensorwert

- 5: Oberfläche von 1
- 6a: Spannvorsprung
- 6b: Spannausnehmung
- 6c: beliebiger Punkt

- 10: Vermassung

- 12: belastungskritischer Bereich

- 14: belastungsunkritischer Bereich

- 16: Bruchlinie

- 20: Visualisierungseinrichtung

- 30: Sensorwertecluster

- 40: Bruchschneide
- 41: Gegenkraft

## Patentansprüche

1. Ein Verfahren zur Beurteilung der Strukturqualität von dreidimensionalen Bauteilen (1), die durch ein Sintern oder Schmelzen eines pulverförmigen Baumaterials unter Verwendung eines additiven Herstellungsprozesses hergestellt wurden, wobei das Verfahren umfasst:
Lokalisieren eines Sensorwerts zu Koordinatenwerten eines Orts im Inneren eines dreidimensionalen Bauteils mit Bezug zu einem Referenzpunkt des Bauteils, wobei der Sensorwert eine strukturelle Bauteilqualität angibt; und
Ausgeben von Anweisungen, welche eingerichtet sind, einen Bestandteil einer Untersuchungseinrichtung nahe zu einer Untersuchungsstelle auf der Oberfläche des Bauteils in Bezug auf den Referenzpunkt zu führen, wobei die Untersuchungsstelle den Koordinatenwerten des Orts im Inneren des dreidimensionalen Bauteils, zu welchen der Sensorwert lokalisiert ist, entspricht.

2. Verfahren nach Anspruch 1, wobei der Sensorwert eine Information von einer Sensorvorrichtung, welche eingerichtet ist, einen durch einen punkt- oder linienförmigen Energieeintrag zum Sintern oder Schmelzen des pulverförmigen Baumaterials erzeugten Schmelzbereich zu erfassen, ist oder wenigstens teilweise auf einer solchen basiert.

3. Verfahren nach Anspruch 1 oder 2, umfassend: Klassifizieren des Sensorwerts als kritischen Wert wenigstens teilweise basierend auf einem einen strukturellen Fehler angebenden Sensorwert, einer Temperaturabweichung im Rahmen des Sinterns oder Schmelzens des pulverförmigen Baumaterials und/oder einer Fehlstelle in einer Schicht des zu sinternden oder zu schmelzenden Baumaterials.

4. Verfahren nach einem der vorhergehenden Ansprüche, umfassend: Klassifizieren des Sensorwerts als kritischen Wert wenigstens teilweise basierend auf dem Umstand, dass der Sensorwert einem lastkritischen Bereich des Bauteils entspricht.

5. Verfahren nach einem der vorhergehenden Ansprüche, umfassend: Bereitstellen, zur Anzeige auf einer Visualisierungseinrichtung, einer Darstellung, welche den mit den Koordinatenwerten des Orts im Inneren des dreidimensionalen Bauteils in Bezug auf den Referenzpunkt des Bauteils lokalisierten Sensorwert umfasst, wobei die Darstellung eine zweidimensionale oder mehrdimensionale Darstellung des Bauteils umfasst, wobei die Darstellung eingerichtet ist, einen Bestandteil einer Untersuchungseinrichtung nahe zu einer Untersuchungsstelle auf der Oberfläche des Bauteils in Bezug auf den Referenzpunkt zu führen.

6. Verfahren nach Anspruch 5, wobei die Darstellung eine Angabe über einen Abstand zwischen dem Referenzpunkt des Bauteils und den dem Sensorwert entsprechenden Koordinatenwerten umfasst, vorzugsweise eine Darstellung einer gemessenen Abstandslinie; und/oder
wobei die Darstellung eine mögliche Bruchlinie und den Sensorwert mit Bezug auf die mögliche Bruchlinie umfasst.

7. Verfahren nach einem der vorhergehenden Ansprüche, wobei der Bezugspunkt des Bauteils einen definierten Punkt umfasst, welcher einer Spannausnehmung oder einem Spannvorsprung des Bauteils entspricht.

8. Verfahren nach einem der vorhergehenden Ansprüche, wobei der Bestandteil einer Untersuchungseinrichtung eine Schneidvorrichtung, eine Bohrvorrichtung oder eine Bruchvorrichtung umfasst, wobei die Untersuchungseinrichtung eingerichtet ist, wenigstens einen Teil des zu testenden Bauteils im Hinblick auf Versagen vorzubereiten.

9. Verfahren nach einem der vorhergehenden Ansprüche, umfassend:
das Lokalisieren des Sensorwerts ein Lokalisieren mehrerer Sensorwerte zu entsprechenden Koordinatenwerten zu Orten im Inneren des dreidimensionalen Bauteils mit Bezug zu einem Referenzpunkt des Bauteils umfasst, wobei die Sensorwerte eine strukturelle Bauteilqualität angeben; und
das Ausgeben von Anweisungen, welche eingerichtet sind, einen Bestandteil einer Untersuchungseinrichtung nahe zu einer Untersuchungsstelle auf der Oberfläche des Bauteils in Bezug auf den Referenzpunkt zu führen, wobei die Untersuchungsstelle den Koordinatenwerten des Orts im Inneren des dreidimensionalen Bauteils, zu welchen ein oder mehrere aus den Sensorwerten ausgewählte Sensorwerte lokalisiert sind, entspricht.

10. Verfahren nach Anspruch 9, umfassend: Bereitstellen, zur Anzeige auf der Visualisierungseinrichtung, einer Darstellung, welche die mit den Koordinatenwerten des Orts im Inneren des dreidimensionalen Bauteils in Bezug auf den Referenzpunkt des Bauteils lokalisierten Sensorwerte umfasst, wobei die Darstellung eine zweidimensionale oder mehrdimensionale Darstellung des Bauteils umfasst, wobei die Darstellung eingerichtet ist, einen Bestandteil einer Untersuchungseinrichtung nahe zu einer Untersuchungsstelle auf der Oberfläche des Bauteils in Bezug auf den Referenzpunkt zu führen.

11. Verfahren nach Anspruch 9, wobei der eine oder die mehreren aus den Sensorwerten ausgewählten Sensorwerte, vorzugsweise aus einem von nahe beieinanderliegendes Sensorwerte umfassenden Sensortwertcluster, einem lastkritischen Bereich des Bauteils entsprechen, wobei das Bauteil den lastkritischen Bereich und einen nichtlastkritischen Bereich umfasst, und wobei die Untersuchungsstelle vorzugsweise dem einen oder den mehreren aus den Sensorwerten ausgewählten Sensorwerten entspricht.

12. Verfahren nach Anspruch 9, umfassend: Klassifizieren wenigstens eines Teils der Sensorwerte als kritische Sensorwerte zumindest teilweise basierend auf Grundlage von (i) der Sensorwert gibt einen strukturellen Fehler, eine Temperaturabweichung im Rahmen des Sinterns oder Schmelzens des pulverförmigen Baumaterials und/oder einer Fehlstelle in einer Schicht des zu sinternden oder zu schmelzenden Baumaterials an; und/oder (ii) der Sensorwert entspricht einem lastkritischen Bereich des Bauteils.

13. Verfahren nach Anspruch 12, umfassend: Bestimmen eines Versagensrisikos, welches mit wenigstens einem Teil der Sensorwerte verbunden ist, wobei das Versagensrisiko zumindest teilweise auf einem Clustergrad zwischen den als kritische Sensorwerte klassifizierten Sensorwerten bestimmt wird, wobei vorzugsweise der Grad des Versagensrisikos zumindest teilweise von dem Clustergrad nahe zu einer möglichen Bruchlinie abhängt.

14. Verfahren nach Anspruch 13, umfassend: Klassifizieren des Versagensrisikos in Bezug zu einer Versagensrisikoskala, vorzugsweise für eine Mehrzahl von Orten des Bauteils, wobei die Versagensrisikoskala zumindest zum Teil auf der Menge an kritischen Sensorwerten und/oder dem entsprechenden Abstand der kritischen Sensorwerte von einer möglichen Bruchlinie basiert und, optional, Auswählen der Untersuchungsstelle zumindest zum Teil auf Grundlage des Grads des Versagensrisikos, wobei die Untersuchungsstelle einer Stelle entspricht, welche aus den mehreren Stellen, welche einen im Verhältnis größeren Grad des Versagensrisikos aufweisen, ausgewählt wird.
